# EUROPÄISCHE PATENTANMELDUNG

(11) **EP 4 645 208 A1**
(43) Veröffentlichungstag der Anmeldung: **05.11.2025**
(21) Anmeldenummer: 24173591.9
(22) Anmeldetag: 30.04.2024
(51) Int. Cl.: G06T 3/4038, H04N 23/698

(54) **VERFAHREN ZUR AUFNAHME EINES GESAMTBILDES EINER UMGEBUNG EINES WASSERFAHRZEUGS, GERÄTEANORDNUNG UND KAMERA**

(71) Anmelder: Eagle-Marine GmbH, 73072 Donzdorf (DE)
(72) Erfinder: Groll, Maximilian, 73113 Ottenbach (DE)
(74) Vertreter: Mzb PartmbB

(57) **Zusammenfassung**

Die Erfindung betrifft ein Verfahren (1000) zur Aufnahme eines Gesamtbildes (22) einer Umgebung eines Wasserfahrzeugs, wobei mit wenigstens zwei Kameras (16) Einzelaufnahmen aufgenommen werden, wobei die Kameras (16) an unterschiedlichen Positionen des Wasserfahrzeugs angeordnet sind. Sie ist dadurch gekennzeichnet,
dass wenigstens eine relative Position und / oder eine relative Ausrichtung einer der Kameras (16), insbesondere relativ zu dem Wasserfahrzeug (12) und / oder relativ zu wenigstens einer anderen der Kameras (16), durch eine die Kameras (16) umfassende Geräteanordnung (14) ermittelt wird, wobei das Gesamtbild (22) aus den Einzelaufnahmen unter Verwendung der relativen Positionen und / oder der relativen Ausrichtungen erstellt wird. Weiter betrifft die Erfindung eine Geräteanordnung (14) sowie eine Kamera (16).

## Beschreibung

Die Erfindung betrifft ein Verfahren zur Aufnahme eines Gesamtbildes einer Umgebung eines Wasserfahrzeugs sowie eine Geräteanordnung und eine Kamera.

Solche Verfahren und Geräteanordnungen werden zum Beispiel verwendet, um Rundumsichten um ein Wasserfahrzeug, beispielsweise ein Boot, aufzunehmen. Solche Rundumsichten können zur lückenlosen Überwachung eine Außenumgebung um das Wasserfahrzeug herum verwendet werden. Auch können solche Rundumsichten ein Rangieren des Wasserfahrzeugs erleichtern.

Üblicherweise weisen die Geräteanordnungen mehrere Kameras auf. Die Kameras sind rund um das Wasserfahrzeug in dessen Bordwänden montiert. Aus Einzelaufnahmen der Kameras wird die Rundumsicht errechnet.

Bei Landfahrzeugen haben Geräteanordnungen zur Aufnahme einer Rundumsicht um das Landfahrzeug eine große Verbreitung bekommen. Typischerweise werden sie bereits bei Herstellung des Landfahrzeugs in dieses an vorbestimmten Positionen eingebaut. Dadurch sind lediglich wenige Kalibrierungen notwendig. Häufig können diese Kalibrierungen zudem durch einfaches Anpeilen von fixen Referenzpunkten erfolgen.

Geräteanordnungen, die für Landfahrzeuge entwickelt sind, lassen sich in der Regel jedoch nicht bei Wasserfahrzeugen verwenden. Aufgrund einer großen Bandbreite unterschiedlicher Typen von Wasserfahrzeugen werden Geräteanordnungen und Verfahren für Wasserfahrzeuge in der Regel nachgerüstet, anstatt bereits bei Herstellung des Fahrzeugs eingebaut zu werden. Die Positionen, an denen die Kameras verbaut werden, sind somit variabel. Referenzpunkte im Wasser können zur Kalibrierung in der Regel nicht genutzt werden, da ihre Position, insbesondere relativ zum Wasserfahrzeug, oftmals nicht hinreichend konstant ist. Zur Kalibrierung muss daher zunächst das Wasserfahrzeug an Land gebracht werden, die Geräteanordnung kalibriert werden und danach das Wasserfahrzeug wieder gewässert werden. Dies ist unkomfortabel und aufwendig.

Aufgabe der vorliegenden Erfindung ist es daher, Verfahren und Vorrichtungen anzubieten, die Gesamtbilder von Umgebungen eines Wasserfahrzeugs ermöglichen, die besonders einfach genutzt werden können.

Gelöst wird die Aufgabe zunächst durch ein **Verfahren zur Aufnahme eines Gesamtbildes** einer Umgebung eines Wasserfahrzeugs, wobei mit wenigstens zwei Kameras Einzelaufnahmen aufgenommen werden, wobei die Kameras an unterschiedlichen Positionen des Wasserfahrzeugs angeordnet sind, wobei wenigstens eine relative Position und / oder eine relative Ausrichtung einer der Kameras, insbesondere relativ zu dem Wasserfahrzeug und / oder relativ zu einer anderen der Kameras, durch ein die Kameras umfassende Geräteanordnung ermittelt wird, wobei das Gesamtbild aus den Einzelaufnahmen unter Verwendung der relativen Position und / oder der relativen Ausrichtung erstellt wird.

Mithilfe des Gesamtbildes kann eine Umgebung des Wasserfahrzeugs überwacht werden. Daher betrifft die Erfindung auch ein **Verfahren zur Überwachung einer Umgebung eines Wasserfahrzeugs,** wobei nach dem vorangehend beschriebenen Verfahren ein Gesamtbild erzeugt wird und anschließend das Gesamtbild ausgewertet wird hinsichtlich Veränderungen im zeitlichen Verlauf. Bei einer besonders vorteilhaften Variante können Veränderungen von Objekten, beispielsweise ein neues Auftreten von Objekten oder ein Verschwinden von Objekten und/oder eine Verlagerung von Objekten, im Gesamtbild detektiert werden. Eine Veränderung, insbesondere eine spezifizierte Veränderung, beispielsweise eine Annäherung eines Objekts an das Wasserfahrzeug bis unter eine vordefinierte Schwelle, erkannt, so kann ein Alarm ausgelöst werden.

Das Verfahren ermöglicht somit beispielsweise, Gefahrensituationen zu erkennen und vorausschauend auszuräumen. Dadurch lassen sich Unfälle des Wasserfahrzeugs vermeiden. Darüber hinaus lässt sich das Wasserfahrzeug dank der besseren Übersicht durch das Gesamtbild das Wasserfahrzeug einfacher und präziser rangieren, um beispielsweise mit dem Wasserfahrzeug an einem Liegeplatz anzulegen.

Weiter betrifft die Erfindung ein **Verfahren zur Steuerung eines Wasserfahrzeugs,** wobei eine Umgebung des Wasserfahrzeugs nach dem vorangehend beschriebenen Verfahren überwacht wird und abhängig von der erkannten Veränderung ein neuer Befehl an eine Steuerung des Wasserfahrzeugs und / oder an einen Motor des Wasserfahrzeugs gesandt wird. Dann kann eine autonome oder zumindest teilautonome Steuerung des Wasserfahrzeugs mithilfe des Gesamtbildes ermöglichen.

Die relative Position und / oder die relative Ausrichtung können relativ zu einem Bezugspunkt am Wasserfahrzeug ermittelt werden. Alternativ oder ergänzend können sie relativ zu einer anderen der Kameras ermittelt werden.

Die Kameras können optische Kameras sein. Sie können 2D- oder 3D-Kameras sein. Umfassen die Kameras auch einen Distanzmesser, beispielsweise auf Ultraschall-Basis, Radar oder als LIDAR, können in das Gesamtbild zusätzliche Abstandsinformationen aufgenommen werden, sodass beispielsweise ein Rangieren des Wasserfahrzeugs in ansonsten unübersichtlichen Umgebungen wesentlich erleichtert und Unfallgefahren gesenkt werden können.

Das Gesamtbild kann wenigstens 180°, insbesondere 360°, einer Umgebung um das Wasserfahrzeug herum umfassen. Es kann als fiktive Luftbild-Ansicht ermittelt werden, also als eine Ansicht von einem fiktiven Betrachtungspunkt an einer Oberseite oder oberhalb des Wasserfahrzeugs aus.

Die Geräteanordnung kann die relativen Positionen und / oder relativen Ausrichtungen ermitteln. Erforderliche Kalibrierungen können somit selbsttätig erfolgen, so dass das Verfahren sehr einfach nutzbar ist. Aufwändige und fehleranfällige manuelle Kalibrierungen können sich erübrigen. Das Wasserfahrzeug braucht zur Kalibrierung nicht aus dem Wasser genommen werden. Die Erstellung von Gesamtbildern von Wasserfahrzeugen wird somit erheblich vereinfacht.

Die relativen Positionen und / oder die relativen Ausrichtungen können fortlaufend und / oder wiederholt ermittelt werden. Dadurch können auch temporäre Kippbewegungen des Wasserfahrzeugs insgesamt kompensiert werden, sodass sich die Genauigkeit des Gesamtbildes erhöhen lässt.

Bei einer Variante des Verfahrens ist denkbar, die Ermittlungen der relativen Positionen und / oder der relativen Ausrichtungen separat im Rahmen eines, beispielsweise bei der Montage der Kameras, durchzuführenden Kalibrierungsverfahrens durchzuführen.

Bei einem solchen Kalibrierungsverfahren ist somit denkbar, dass nach einer Montage der Kameras am Wasserfahrzeug die Geräteanordnung die relativen Positionen und / oder die relativen Ausrichtungen ermittelt.

Anschließend können die verbleibenden Phasen des Verfahrens durchgeführt werden. Insbesondere können einmalig oder wiederholt Einzelaufnahmen mit den montierten Kameras aufgenommen werden und anschließend unter Verwendung der vorab ermittelten relativen Positionen und / oder der relativen Ausrichtungen Gesamtbilder erstellt werden.

Vorzugsweise werden die relativen Positionen und / oder die relativen Ausrichtungen jeder der Kameras zu jeder anderen der Kameras durch die Geräteanordnung ermittelt. Dazu kann es genügen, die relativen Positionen und / oder Ausrichtungen jeder der Kameras zu einem Bezugspunkt des Wasserfahrzeugs zu ermitteln.

Bei einer Variante des Verfahrens ist denkbar, dass wenigstens eine der relativen Positionen und / oder der relativen Ausrichtungen mithilfe eines Lagesensors ermittelt wird, wobei der Lagesensor eingerichtet ist, eine Position und / oder eine Ausrichtung der zugehörigen Kamera zu ermitteln. Mithilfe des Lagesensor kann somit die relative Position und / oder die relative Ausrichtung besonders verlässlich, insbesondere unabhängig von Wetterlage und Sichtbedingungen, bestimmt werden.

Der Lagesensor kann mit der übrigen Kamera fest verbunden sein, also eine Einheit bilden.

Alternativ oder ergänzend ist auch denkbar, dass der Lagesensor lediglich temporär an der Kamera angeordnet wird. Dazu kann die Kamera eine Anlagestelle aufweisen, an der der Lagesensor in einer definierten Lage angelegt werden kann.

Dann können mit nur wenigen Lagesensoren, insbesondere mit lediglich einem einzigen Lagesensor, die relativen Positionen und / oder Ausrichtungen mehrerer Kameras nacheinander ermittelt werden. Beispielsweise kann der Lagesensor Teil eines Smartphones oder eines sonstigen, portablen Rechners sein. Hierdurch lassen sich Materialkosten reduzieren. Eine spätere, sehr einfache Nachkalibrierung ist ebenfalls denkbar, insbesondere, wenn ein Lagesensor beispielsweise eines Smartphones oder eines ähnlich verbreiteten portablen Rechners verwendet wird.

Zur Ermittlung der relativen Position und / oder der relativen Ausrichtung können alternativ oder ergänzend Bilddaten von wenigstens einer der Einzelaufnahmen ausgewertet werden. Dabei kann während der Durchführung des Verfahrens beispielsweise vorausgesetzt werden, dass sich die Kameras in einem maritimen Umfeld befinden, somit können typische Bilddaten maritimer Umgebungen ausgewertet werden, die auf die relative Position und / oder die relative Ausrichtung schließen lassen. Dies können beispielsweise ein Schattenwurf, eine Lichteinfallsrichtung, beispielsweise des Sonnenlichts, bestimmte typische geometrische Formen, beispielsweise eine typischerweise vertikal ausgerichtete Mole, eine per Definition horizontal ausgerichtete Horizontlinie oder dergleichen sein. Es kann vorgesehen sein, in den Bilddaten maritime Objekte, beispielsweise bestimmte Seezeichen oder Landungsstege, zu suchen und / oder zu detektieren. Zu den maritimen Objekten können Daten wie beispielsweise Abmessungen oder Längenverhältnisse, beispielsweise ein Verhältnis einer Breite zu einer Höhe, beispielsweise des Seezeichens oder des Landungsstegs, bekannt sein. Dann können diese Daten zu den maritimen Objekten zur Ermittlung der relativen Position und / oder der relativen Ausrichtung genutzt werden.

Denkbar ist auch, Zeitreihen von Einzelaufnahmen aufzunehmen und, beispielsweise durch Korrelationsanalysen, Zusammenhänge zwischen den Einzelaufnahmen verschiedener Kameras herzustellen und diese Zusammenhänge wiederum zu verwenden, um wenigstens eine der relativen Positionen und / oder der relativen Ausrichtungen zu ermitteln. Derartige Auswertungen sind auch laufend möglich. Sie erfordern keinen separaten Lagesensor und können somit kostengünstig durchgeführt werden.

Denkbar ist insbesondere, zunächst Tiefeninformationen von solchen Bilddaten oder spezifischen Merkmalen, beispielsweise mittels selbstüberwachter Tiefenschätzung, siehe beispielsweise arXiv:1806.01260v4 [cs.CV] vom 17.08.2019, zu ermitteln.

Hieraus lassen sich, zunächst für jede der Kameras einzeln, dreidimensionale Punktwolken mit x-,y-,z-Koordinaten der relevanten Merkmale erhalten. Hierzu kann das eingesetzte neuronale Netzwerk mittels selbstüberwachten Lernens trainiert werden.

Die einzelnen dreidimensionalen Punktwolken können sodann anhand übereinstimmender Merkmale zu einer gesamthaften, dreidimensionalen Gesamt-Punktwolke zusammengefügt werden. Im Rahmen dieses Merkmalsabgleichs lassen sich zudem die relativen Positionen und relativen Ausrichtungen der Kameras ermitteln.

Anhand dieser Gesamt-Punktwolke können die Merkmale aus den Bilddaten auf ein virtuelles 3D-Netz projiziert werden, es ergibt sich somit zunächst eine dreidimensionale Gesamtansicht. Denkbar ist auch eine Projektion auf eine zweidimensionale Ebene.

Varianten des Verfahrens können vorsehen, dass Verarbeitungsschritte zur Verarbeitung der Einzelaufnahmen in einer bestimmten Reihenfolge erfolgen.

Insbesondere kann vorgesehen sein, dass in einer ersten Phase sich entsprechende Merkmale auf verschiedenen Einzelaufnahmen identifiziert werden. Dazu können die Einzelaufnahmen beispielsweise mithilfe eines Segmentierers segmentiert werden. Der Segmentierer kann mithilfe eines neuronalen Netzes implementiert sein.

Vorzugsweise kann der Segmentierer auf Bilddaten ausgerichtet sein, insbesondere mit Bilddaten trainiert sein, die mit einer Optik aufgenommen worden sind, die den Optiken der Kameras ähnelt oder diesen entspricht. Weisen die Kameras beispielsweise Fischaugen-Optiken auf, so kann der Segmentierer mit Bilddaten trainiert sein, die mit Kameras mit Fischaugen-Optiken aufgenommen worden sind. Der Segmentierer kann mit Bilddaten trainiert sein, die typisch für maritime Umgebungen sind wie beispielsweise die vorangehenden, bereits genannten Beispiele für Bilddaten aus maritimen Umgebungen. Es können reale als auch künstlich erzeugte Bilddaten zum Training verwendet werden. Insbesondere können für das Training Trainings-Bilddaten durch Vervielfachung und Modifikation realer Bilddaten erzeugt werden. Die Modifikationen können Rotationen, perspektivische Verzerrungen, insbesondere Fischaugen-Verzerrungen, sowie Lichteffekte, insbesondere Reflexionen, Blendungen, beispielsweise durch bereichsweise Aufhellung von Pixeln der Bilddaten, umfassen. Eigene Erkenntnisse haben gezeigt, dass bei Wasserfahrzeugen die Erzeugung eines Gesamtbildes erheblich verbessert werden kann, wenn solche, gerade auf dem Wasser besonders häufig anzutreffenden Lichteffekte, in den Trainings-Bilddaten abgebildet werden.

In einer nachfolgenden, zweiten Phase können dann die Einzelaufnahmen unter Verwendung der jeweiligen relativen Positionen und / oder der relativen Ausrichtungen lineartransformiert werden. In dieser zweiten Phase ist auch denkbar, die Einzelaufnahmen zu entzerren, beispielsweise eine Fischaugen-Verzeichnungen zu kompensieren. Somit können die Merkmale anhand der ursprünglichen Aufnahmen der Einzelaufnahmen identifiziert werden. Aus eigenen Untersuchungen hat sich gezeigt, dass sich hierdurch zuverlässigere Identifikationen erzielt werden können.

In einer, der zweiten Phase nachfolgenden, dritten Phase, kann dann das Gesamtbild aus den, insbesondere transformierten und ggf. entzerrten, Einzelaufnahmen anhand der identifizierten Merkmale erstellt werden. Dazu können mehrere Einzelaufnahmen zu einem Gesamtbild zusammengesetzt werden. Dabei kann berücksichtigt werden, dass sich entsprechende Merkmale, die auf unterschiedlichen Einzelaufnahmen ursprünglich enthalten waren, im Gesamtbild als ein Merkmal und / oder aufeinander liegend abgebildet werden.

Das Zusammensetzen kann beispielsweise mit Hilfe des ORB-Algorithmus in Python-OpenCV erfolgen.

Das Verfahren verbessert die Umgebungswahrnehmung um das Wasserfahrzeug und damit beispielsweise die Sicherheit beim Rangieren des Wasserfahrzeugs in besonderem Maße, wenn das erstellte Gesamtbild wenigstens einer 180°-Sicht, insbesondere einer Rundumsicht, also einer 360°-Sicht, entspricht.

Die Erfindung betrifft auch eine **Geräteanordnung zur Aufnahme eines Gesamtbildes einer Umgebung eines Wasserfahrzeugs,** umfassend wenigstens zwei Kameras, die an einem Wasserfahrzeug angeordnet sind und / oder die eingerichtet sind, an einem Wasserfahrzeug angeordnet zu werden, wobei die Geräteanordnung eingerichtet ist, dass vorangehenden beschriebene Verfahren auszuführen.

Die Geräteanordnung kann einen Rechner aufweisen.

Der Rechner kann einen auf dem Rechner ausführbaren Programmcode aufweisen, der bei Ausführung auf dem Rechner das Verfahren implementiert. Der Rechner und / oder der Programmcode können insbesondere den Segmentierer umfassen.

Der Rechner kann auch ein Display umfassen. Auf dem Display kann das Gesamtbild und / oder die Einzelaufnahmen ausgebaut sein. Denkbar ist auch, dass der Rechner ein Signalgeber umfasst. Der Signalgeber kann auch mithilfe des Displays ausgebildet sein. Dazu kann beispielsweise der Rechner eingerichtet sein, bei Bedarf ein Warnsignal auf dem Display anzuzeigen. Der Signalgeber kann beispielsweise aktiviert werden, insbesondere kann das Warnsignal auf dem Display dargestellt werden und / oder ein akustisches Signal ausgegeben werden, wenn die Geräteanordnung, insbesondere der Rechner und insbesondere anhand der Einzelaufnahmen und / oder des Gesamtbildes, eine Gefahrensituation detektiert, beispielsweise eine drohende Kollision des Wasserfahrzeugs mit einem nahestehenden Objekt, beispielsweise einer Wand eines Hafenbeckens.

Ein **Computerprogrammprodukt** kann einen Datenträger umfassen, auf dem der Programmcode gespeichert ist. Weist das Computerprogrammprodukt eine Verbindung zu beispielsweise dem Internet auf, kann der Programmcode vom Computerprogrammprodukt aus der Ferne abrufbar abgelegt sein.

In den Rahmen der Erfindung fällt insbesondere eine Geräteanordnung **zur Aufnahme eines Gesamtbildes einer Umgebung eines Wasserfahrzeugs,** umfassend wenigstens zwei Kameras, die an einem Wasserfahrzeug angeordnet sind und / oder die eingerichtet sind, an einem Wasserfahrzeug angeordnet zu werden, wobei die Geräteanordnung eingerichtet ist, wenigstens eine relative Position und / oder eine relative Ausrichtung einer Kamera, insbesondere relativ zu dem Wasserfahrzeug und / oder relativ zu wenigstens einer anderen der Kameras, zu ermitteln.

Auch solche Geräteanordnungen ermöglichen eine selbsttätige Kalibrierung, sodass sich wiederum die Erstellung von Gesamtbildern für Wasserfahrzeuge erheblich vereinfacht.

Die Geräteanordnung kann ein oder mehrere der Eigenschaften der vorangehenden beschriebene Geräteanordnung aufweisen. Sie kann insbesondere ebenfalls einen Rechner aufweisen. Auf dem Rechner kann der vorangehend beschriebene Programmcode ausführbar abgelegt sein. Sie kann eingerichtet sein, dass vorangehend beschriebene Verfahren auszuführen.

Die Geräteanordnung kann wenigstens vier, insbesondere wenigstens sechs, Kameras aufweisen. Mit einer solchen erhöhten Anzahl von Kameras lassen sich 180°-Sichten sowie Rundum-Sichten mit verbesserter Auflösung erstellen.

Die Geräteanordnung kann einen Lagesensor aufweisen, der eingerichtet ist, die relative Position und / oder die relative Ausrichtung zu detektieren. Somit können die relative Position und / oder die relative Ausrichtung unabhängig von Umgebungsbedingungen wie Tageslicht oder Wetter ermittelt werden.

Auf dem Wasser gibt es häufig nur wenige Merkmale, die für eine Software-basierte Ermittlung der relativen Position und / oder Ausrichtung genutzt werden können. Solche Software-Lösungen, beispielsweise KI-gestützte Lösungen, nutzen zudem häufig Wahrscheinlichkeits-basierte Entscheidungen. Eine Hardware-basierte Lösung mithilfe des Lagesensors kann somit häufig, insbesondere in maritimer Umgebung, zuverlässigere Ergebnisse liefern.

Vorzugsweise kann der Lagesensor wenigstens ein Gyroskop, eine IMU, also eine Inertialmesseinheit, einen Kompass, insbesondere einen elektronischen Kompass, und / oder ein Ortungssystem umfassen. Das Ortungssystem kann beispielsweise ein satellitengestütztes Ortungssystem unter Verwendung von GPS, BAIDU oder GLONASS und / oder ein Funk-basiertes Ortungssystem, beispielsweise ein Bluetooth- oder WLAN-basiertes Ortungssystem, umfassen. Diese Technologien erlauben eine präzise Erfassung und sind kostengünstig verfügbar.

In den Rahmen der Erfindung fällt des Weiteren eine **Kamera** für die Geräteanordnung. Die Kamera umfasst wenigstens ein Kameramodul zur Aufnahme von Einzelaufnahmen. Sie kann ein Fischaugen-Objektiv aufweisen, um einen großen Blickwinkel zu erfassen.

Bei besonders bevorzugten Ausgestaltungen kann die Kamera wenigstens einen Lagesensor aufweisen, der eingerichtet ist, eine relative Position und / oder eine relative Ausrichtung der Kamera zu detektieren.

Insbesondere kann die Kamera den Lagesensor oder zumindest einen der Lagesensoren der Geräteanordnung umfassen. Denkbar ist, dass jede Kamera der Geräteanordnung ihren eigenen Lagesensor aufweist. So können gleichzeitig die relativen Positionen und / oder relativen Ausrichtungen von mehreren Kameras erfasst werden.

Insbesondere kann der Lagesensor, auch wenn er Teil der Kamera ist, wenigstens ein Gyroskop, eine IMU, einen Kompass, insbesondere einen elektronischen Kompass und / oder ein Ortungssystem, umfassen.

Um den harschen maritimen Umgebungsbedingungen gerecht zu werden, kann die Kamera staub- und / oder wasserdicht nach wenigstens IP67, insbesondere gemäß DIN EN 6052 oder ISO 20653, ausgebildet sein. Sie kann zumindest teilweise durch ein Edelstahlgehäuse verkleidet sein.

Die genannten Verfahren und Geräte können insbesondere bei Luxusyachten zum Einsatz kommen. Um diese während einer Nachrüstung möglichst wenig zu schädigen, können die Geräte, insbesondere die Kameras, zur störungsfreien Montage, insbesondere zur Montage ohne Bordwände per florieren zu müssen, eingerichtet sein.

Dazu ist es denkbar, dass die Kamera eine Solarzelle, eine wiederaufladbare Batterie und / oder eine drahtlose Energieschnittstelle, beispielsweise eine induktive Energieschnittstelle, umfasst. Somit kann die Kamera mit Energie versorgt werden, ohne dass sie direkt mit einem stromführenden Kabel verbunden sein bräuchte.

Darüber hinaus ist es denkbar, Daten, insbesondere der Einzelaufnahmen, wenigstens über eine kurze Distanz hinweg, beispielsweise durch eine Bordwand hindurch, drahtlos zu übertragen. Dazu kann die Kamera eine drahtlose Daten Schnittstelle aufweisen.

Die Kamera kann besonders stabil mit dem Wasserfahrzeug, insbesondere einer Bordwand des Wasserfahrzeugs, befestigt werden, wenn sie eine Montageplatte aufweist. Die Montageplatte kann Befestigungslöcher aufweisen. An den Befestigungslöchern kann die Montageplatte gegen das Wasserfahrzeug, beispielsweise gegen eine Bordwand, geschraubt werden.

Die Kamera kann auch eine Anlagestelle aufweisen, an der ein Lagesensor, beispielsweise temporär, mit einer definierten Ausrichtung angelegt werden kann. Somit lässt sich ein Lagesensor für mehrere Kameras verwenden, wodurch Herstellungskosten für die Geräteanordnung minimiert werden können.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

### Es zeigen:

- Figur 1: eine schematische Draufsicht auf ein in einer Anlegestelle befindliches Wasserfahrzeug mit einer Geräteanordnung;
- Figur 2: eine Draufsicht auf eine Kamera;
- Figur 3: eine perspektivische Schrägansicht auf die Kamera;
- Figur 4: eine schematische Darstellung des Aufbaus der Kamera;
- Figur 5: eine schematische Darstellung zweier Kameras, die dasselbe Merkmal aufnehmen;
- Figur 6: ein Ablaufdiagramm eines Verfahrens.

In der folgenden Beschreibung der Figuren sowie in der Zeichnung werden zur Erleichterung des Verständnisses die gleichen Bezugszeichen für sich entsprechende Elemente verwendet.

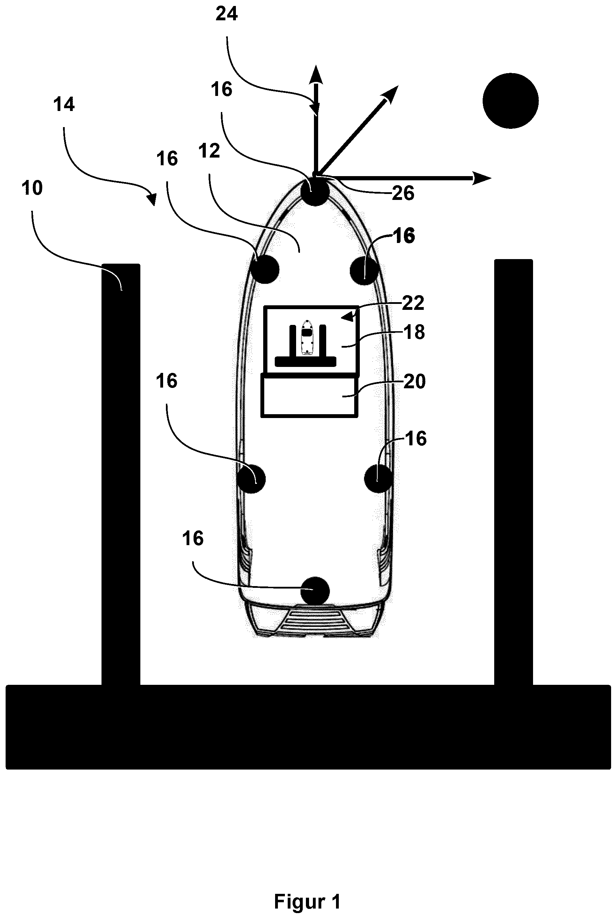

**Figur 1** zeigt eine schematische Draufsicht auf ein in einer Anlegestelle **10** befindliches Wasserfahrzeug **12.**

Das Wasserfahrzeug 12 weist eine Geräteanordnung **14** auf. Die Geräteanordnung 14 weist mehrere Kameras **16** auf. Im Beispiel weist die Geräteanordnung 14 sechs Kameras 16 auf. Die Kameras 16 befinden sich an Außenwänden des Wasserfahrzeug 12.

Ferner umfasst die Geräteanordnung 14 ein Display **18,** das an einen Rechner **20** angeschlossen ist.

Auf dem Display 18 ist ein Gesamtbild **22** abgebildet, das durch die Geräteanordnung 14 erzeugt worden ist.

Ferner ist in Figur 1 schematisch ein Koordinatensystem **24** mit einem Bezugspunkt **26** eingezeichnet. Positionen und Ausrichtungen der Kameras 16 können in Bezug auf diesen Bezugspunkt 26 sowie dem Koordinatensystem 24 durch die Geräteanordnung 14 ermittelt werden.

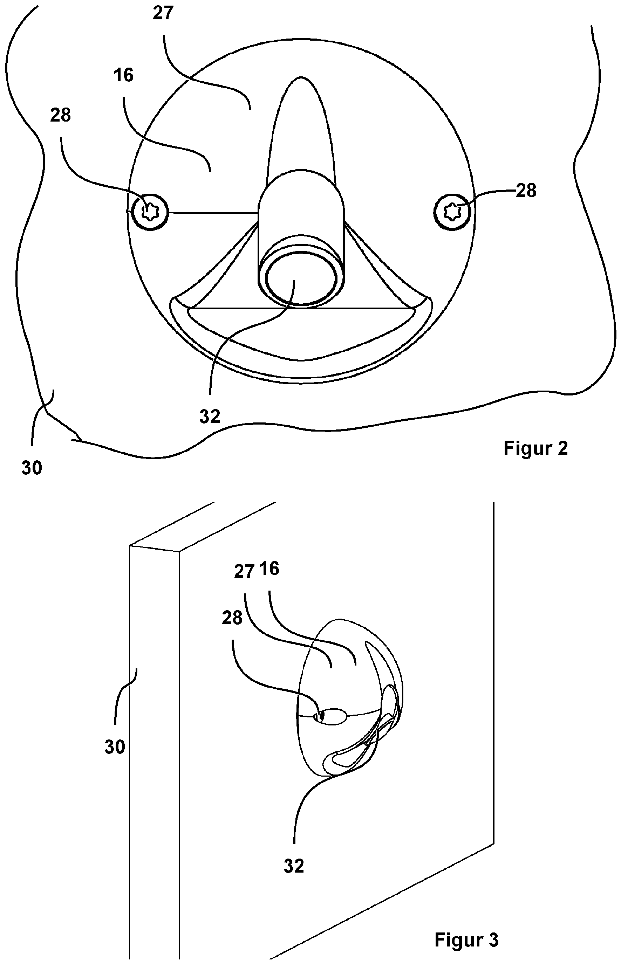

**Figur 2** zeigt in einer perspektivischen Draufsicht eine Kamera 16 und **Figur 3** zeigt die Kamera 16 in einer perspektivischen Seitenansicht.

Die Kamera 16 ist mithilfe eines Gehäuses **27** und Schrauben **28** an einer Außenwand **30** (in Figur 2 lediglich schematisch angedeutet) des Wasserfahrzeugs 12 befestigt. Das Gehäuse 27 ist aus Edelstahl ausgebildet.

Insgesamt ist die Kamera 16 Wasser- und Staub-geschützt nach IP 67.

Zu erkennen ist ferner ein Fischaugen-Objektiv **32.** bei dem hier dargestellten Ausführungsbeispiel der Kamera 16 ist das Fischaugen-Objektiv 32 schräg nach unten ausgerichtet.

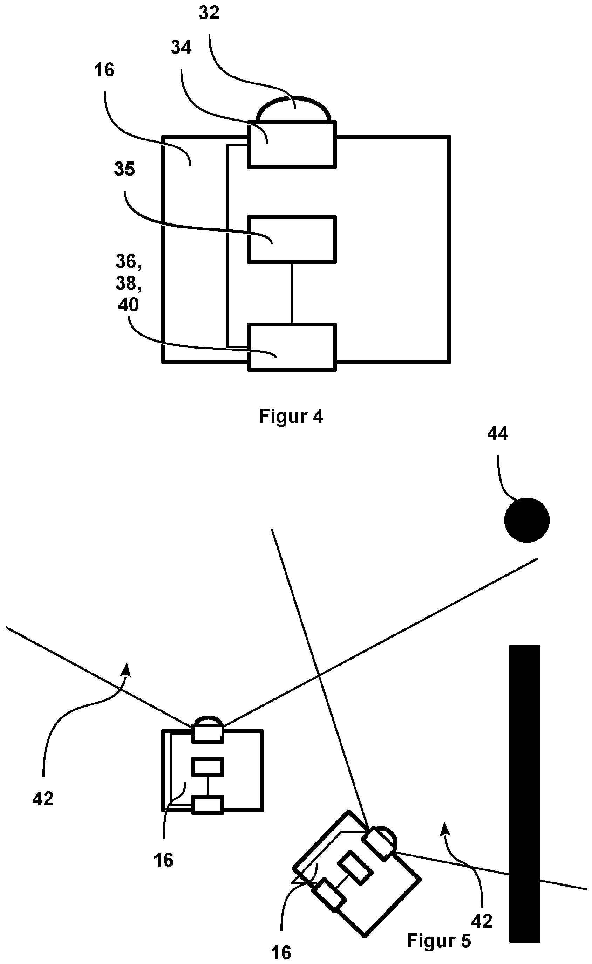

**Figur 4** zeigt in einer schematischen Ansicht die Kamera 16. Zu erkennen ist, dass die Kamera 16 ein Kameramodul **34** aufweist, auf dem sich das Fischaugen-Objektiv 32 befindet. Das Kameramodul 34 kann beispielsweise eine CMOS-Kamera beinhalten.

Darüber hinaus weist die Kamera 16 einen eine IMU umfassenden Lagesensor **35** auf. Mit dem Lagesensor 35 kann eine Position sowie eine Ausrichtung der Kamera 16 relativ zum Koordinatensystem 24 (siehe Figur 1) ermittelt werden.

Die Kamera 16 weist weiter eine drahtlose Schnittstelle **36** auf. Die drahtlose Schnittstelle 36 ist in diesem Ausführungsbeispiel eine induktive Schnittstelle. Über sie kann als Energieschnittstelle **38** die für den Betrieb erforderliche Energie der Kamera 16 zugeführt werden. Als Datenschnittstelle **40** ist sie zudem eingerichtet, Daten der Kamera 16, insbesondere Einzelaufnahmen des Kameramoduls 34 sowie des Lagesensors 35, zu dem Rechner 20 (siehe Figur 1) zu übertragen. Denkbar ist auch, dass die Datenschnittstelle 40 bidirektional ausgelegt ist, sodass auch Daten, beispielsweise Steuerdaten, vom Rechner 20 zur Kamera 16 übertragen werden können. Bei einer alternativen, kabelgebundenen Ausführung kann ein Koaxialkabel zur Energieversorgung und zur Datenübertragung verwendet werden.

Somit ist es möglich, die Kamera 16 von einer Außenseite der Außenwand 30 (siehe Figur 2) aus an diese anzuschrauben, zu kleben oder anderweitig zu befestigen. An der Innenseite der Außenwand 30 kann dann eine Strom- und Datenleitung verlegt werden, über die vom Rechner 20 (siehe Figur 1) induktiv Energie und Daten durch die Außenwand 30 hindurch an die Kamera 16 übertragen bzw. von dieser empfangen werden können.

**Figur 5** zeigt zwei Kameras 16 mit ihren, in Figur 5 schematisch dargestellten, Sichtfeldern **42.** Bei den beiden Kameras 16 kann es sich beispielsweise um eine am Bug des Wasserfahrzeugs 12 befindliche und eine schräg vorne am Wasserfahrzeug 12 befindliche Kamera 16 handeln.

Zu erkennen ist, dass sich in beiden Sichtfeldern 42 dasselbe Merkmal **44,** beispielsweise eine Mole, sich befindet. Einzelaufnahmen der beiden Kameras 16 weisen somit beide Abbildungen des Merkmals 44 auf. Wird somit das Merkmal 44 als gemeinsames Merkmal identifiziert, so kann daraus auf die Überlappung der Sichtfeldern 42 und damit der zugehörigen Einzelaufnahmen der beiden Kameras 16 geschlossen werden.

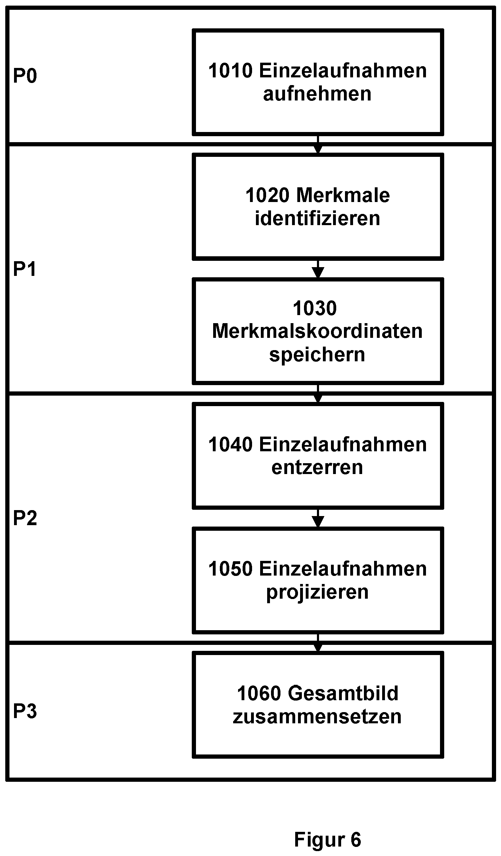

**Figur 6** zeigt nun ein Ablaufdiagramm eines Verfahrens **1000** zur Aufnahme eines Gesamtbilds 22 einer Umgebung des Wasserfahrzeugs 12. Zur Beschreibung des Verfahrens 1000 werden die vorangehend eingeführten Bezugszeichen, insbesondere in Bezug auf die Geräteanordnung 12 und die Kameras 16, weiterverwendet.

In einer Startphase **P0,** insbesondere in einem ersten Schritt **1010** des Verfahrens 1000, werden mit den wenigstens zwei Kameras 16 Einzelaufnahmen aufgenommen. Dabei befinden sich, wie beispielsweise aus Figur 1 ersichtlich, die Kameras 16 an unterschiedlichen Positionen des Wasserfahrzeugs 12.

Wird beispielsweise eine Einzelaufnahme einer in der Realität rechteckigen Hafenwand aufgenommen, so wird diese in der zugehörigen Einzelaufnahme aufgrund der Fischaugen-Objektive der Kameras 16 als Ellipse abgebildet.

In einer nachfolgenden Phase **P1** werden nun in einem Schritt **1020** die aufgenommenen Einzelaufnahmen analysiert, um besondere Merkmale, wie beispielsweise das Merkmal 44 aus Figur 5, in den Einzelaufnahmen zu identifizieren. Insbesondere werden Merkmale identifiziert, die in mehreren der Einzelaufnahmen, also von verschiedenen Kameras 16, abgebildet sind.

In einem nachfolgenden Schritt **1030** werden die zu den identifizierten Merkmalen zugehörigen Koordinaten gespeichert.

In einer hieran sich anschließenden Phase **P2** werden in einem Schritt **1040** zunächst die Einzelaufnahmen entzerrt. Insbesondere werden die durch die Fischaugen-Objektive 32 erzeugten Verzeichnungen entzerrt. Aus der Ellipse würde somit dem Beispiel der Hafenwand folgend, diese nun nach der Entzerrung als Rechteck abgebildet werden.

Mithilfe des Lagesensors 35 werden nun in einem Schritt **1050** die relativen Positionen sowie relativen Ausrichtungen der Kameras 16 relativ zum Koordinatensystem 24 gemessen. Anhand dieser relativen Positionen und der relativen Ausrichtungen werden nun die Einzelaufnahmen lineartransformiert. Die als Rechteck abgebildete Hafenwand würde somit in ein gegebenenfalls rotiertes Trapez transformiert.

Bei einer Verfahrensvariante des Verfahrens 1000 ist denkbar, dass die Messungen der relativen Positionen sowie der relativen Ausrichtungen im Rahmen eines Kalibrierungsverfahrens bereits vor der Phase P0 oder während der Phase **P0** erfolgen. Das kann beispielsweise vorteilhaft sein, wenn zur Messung lediglich ein einziger Lagesensor zur Verfügung steht und mit diesem die relativen Positionen und relativen Ausrichtungen der einzelnen Kameras 16 nacheinander gemessen werden.

In einer abschließenden Phase **P3** werden in einem Schritt **1060** die Einzelaufnahmen zu dem Gesamtbild 22 unter Berücksichtigung der Relationen der identifizierten Merkmale zueinander, wie sie in den ursprünglichen Einzelaufnahmen vorlagen, zusammengesetzt. Insbesondere werden die Einzelaufnahmen derart zusammengefügt, dass Merkmale, die in zwei Einzelaufnahmen enthalten waren, im Gesamtbild 22 deckungsgleich abgebildet sind.

Anschließend kann das Gesamtbild 22 auf dem Display 18 abgebildet werden.

Das Gesamtbild 22 kann weiterverarbeitet werden. Insbesondere kann das Gesamtbild 22 mit einem auf dem Rechner 20 ausgeführten Segmentierungsalgorithmus hinsichtlich Objekten und deren Veränderungen analysiert werden. Um beispielsweise das Wasserfahrzeug 12 während eines Anlegevorgangs an der Anlegestelle 10 überwachen, kann das Gesamtbild 22 auf Wände und andere Elemente der Anlegestelle 10 analysiert werden.

Denkbar ist, wenn durch diese Analyse des Gesamtbilds 22 eine Gefahrensituation detektiert wird, ein Alarmsignal auszulösen. Das Alarmsignal kann einen Benutzer vor einem drohenden Unfall warnen.

Bei einem weiteren Verfahren ist auch denkbar, dass anhand des Gesamtbilds 12, insbesondere mit Hilfe dieser Analyse, das Wasserfahrzeug 12 gesteuert wird. Dazu kann eine Steuerung des Wasserfahrzeugs 12 in Abhängigkeit vom Gesamtbild 12, insbesondere von im Gesamtbild 12 erkannten Objekten und / oder deren Veränderungen, betätigt werden. Das Wasserfahrzeug 12 kann dadurch beispielsweise derart gesteuert werden, dass es teilautonom oder vollständig autonom an der Anlegestelle 10 anlegt bzw. ablegt. In analoger Weise ist denkbar, dass das Wasserfahrzeug 12 unter Überwachung seiner Umgebung anhand des Gesamtbilds 12 teilautonom oder vollständig autonom auf einem auswählbaren Kurs und / oder zu einem auswählbaren Ziel fährt.

### Bezugszeichenliste

- 10: Anlegestelle
- 12: Wasserfahrzeug
- 14: Geräteanordnung
- 16: Kamera
- 18: Display
- 20: Rechner
- 22: Gesamtbild
- 24: Koordinatensystem
- 26: Bezugspunkt
- 27: Gehäuse
- 28: Schraube
- 30: Außenwand
- 32: Objektiv
- 34: Kameramodul
- 35: Lagesensor
- 36: Schnittstelle
- 38: Energieschnittstelle
- 40: Datenschnittstelle
- 42: Sichtfeld
- 44: Merkmal
- 1000: Verfahren
- 1010: Schritt
- 1020: Schritt
- 1030: Schritt
- 1040: Schritt
- 1050: Schritt
- 1060: Schritt
- P0: Startphase
- P1: erste Phase
- P2: zweite Phase
- P3: dritte Phase

## Patentansprüche

1. **Verfahren (1000)** zur Aufnahme eines Gesamtbildes (22) einer Umgebung eines Wasserfahrzeugs (12),
wobei mit wenigstens zwei Kameras (16) Einzelaufnahmen aufgenommen werden, wobei die Kameras (16) an unterschiedlichen Positionen des Wasserfahrzeugs (12) angeordnet sind,
**dadurch gekennzeichnet,**
**dass** wenigstens eine relative Position und / oder eine relative Ausrichtung einer der Kameras (16), insbesondere relativ zu dem Wasserfahrzeug (12) und / oder relativ zu wenigstens einer anderen der Kameras (16), durch eine die Kameras (16) umfassende Geräteanordnung (14) ermittelt wird,
wobei das Gesamtbild (22) aus den Einzelaufnahmen unter Verwendung der relativen Positionen und / oder der relativen Ausrichtungen erstellt wird.

2. Verfahren (1000) nach dem vorhergehenden Patentanspruch, **dadurch gekennzeichnet, dass** wenigstens eine der relativen Positionen und / oder der relativen Ausrichtungen mithilfe eines Lagesensors (35) ermittelt wird, wobei der Lagesensor (35) eingerichtet ist, eine Position und / oder eine Ausrichtung der zugehörigen Kamera (16) zu ermitteln.

3. Verfahren (1000) nach einem der vorhergehenden Patentansprüche, **dadurch gekennzeichnet, dass** zur Ermittlung der relativen Position und / oder der relativen Ausrichtung Bilddaten von wenigstens einer der Einzelaufnahmen ausgewertet werden.

4. Verfahren (1000) nach einem der vorhergehenden Patentansprüche, **dadurch gekennzeichnet, dass** in einer ersten Phase (P1) sich entsprechende Merkmale (44) auf verschiedenen Einzelaufnahmen identifiziert werden, und dass in einer nachfolgenden, zweiten Phase (P2) die Einzelaufnahmen unter Verwendung der jeweiligen relativen Positionen und / oder der relativen Ausrichtungen lineartransformiert werden, und
dass in einer, der zweiten Phase (P2) nachfolgenden, dritten Phase (P3), das Gesamtbild (22) aus den Einzelaufnahmen anhand der identifizierten Merkmale (44) erstellt wird.

5. Verfahren (1000) nach einem der vorhergehenden Patentansprüche, **dadurch gekennzeichnet, dass** das erstellte Gesamtbild (22) wenigstens einer 180°-Sicht, insbesondere einer Rundumsicht, also einer 360°-Sicht, entspricht.

6. **Geräteanordnung (14)** zur Aufnahme eines Gesamtbildes (22) einer Umgebung eines Wasserfahrzeugs (12), umfassend wenigstens zwei Kameras (16), die an einem Wasserfahrzeug (12) angeordnet sind und / oder die eingerichtet sind, an einem Wasserfahrzeug (12) angeordnet zu werden,
**dadurch gekennzeichnet,**
**dass** die Geräteanordnung (14) eingerichtet ist, wenigstens eine relative Position und / oder eine relative Ausrichtung einer Kamera (16), insbesondere relativ zu dem Wasserfahrzeug (12) und / oder relativ zu wenigstens einer anderen der Kameras (16), zu ermitteln.

7. Geräteanordnung (14) nach dem vorhergehenden Patentanspruch, **dadurch gekennzeichnet, dass** die Geräteanordnung (14) einen Lagesensor (35) aufweist, der eingerichtet ist, die relative Position und / oder die relative Ausrichtung zu detektieren.

8. Geräteanordnung (14) nach einem der beiden vorangehenden Patentansprüche, **dadurch gekennzeichnet, dass** der Lagesensor (35) wenigstens ein Gyroskop, eine IMU, einen Kompass, insbesondere einen elektronischen Kompass, und / oder ein Ortungssystem umfasst.

9. **Kamera (16)** für eine Geräteanordnung (14) nach einem der Patentansprüche 6 bis 8, umfassend wenigstens ein Kameramodul (34) zur Aufnahme von Einzelaufnahmen.

10. Kamera (16) nach dem vorhergehenden Patentanspruch, **dadurch gekennzeichnet, dass** die Kamera (16) wenigstens einen Lagesensor (35) aufweist, der eingerichtet ist, eine relative Position und / oder eine relative Ausrichtung der Kamera (16) zu detektieren.

11. Kamera (16) nach einem der beiden vorhergehenden Patentansprüche, **dadurch gekennzeichnet, dass** der Lagesensor (35) wenigstens ein Gyroskop, eine IMU, einen Kompass, insbesondere einen elektronischen Kompass und / oder ein Ortungssystem, umfasst.

12. Kamera (16) nach einem der Patentansprüche 9 bis 11, **dadurch gekennzeichnet, dass** die Kamera (16) staub- und / oder wasserdicht nach wenigstens IP67 ausgebildet ist.

13. Kamera (16) nach einem der Patentansprüche 9 bis 12, **dadurch gekennzeichnet, dass** die Kamera (16) eine Solarzelle, eine wiederaufladbare Batterie und / oder eine drahtlose Energieschnittstelle (38), beispielsweise eine induktive Energieschnittstelle (38), umfasst.

14. Kamera (16) nach einem der Patentansprüche 9 bis 13, **dadurch gekennzeichnet, dass** die Kamera (16) eine drahtlose Datenschnittstelle (40) aufweist.
